# EUROPEAN PATENT APPLICATION

(11) **EP 4 683 050 A1**
(43) Date of publication of application: **21.01.2026**
(21) Application number: 25160935.0
(22) Date of filing: 28.02.2025
(51) Int. Cl.: H01M 50/103, H01M 50/15, H01M 50/342

(54) **SECONDARY BATTERY AND METHOD OF MANUFACTURING SAME**

(30) Priority: 15.07.2024 KR 20240093299
(71) Applicant: SAMSUNG SDI CO., LTD., Yongin-si, Gyeonggi-do 17084 (KR)
(72) Inventor: KIM, Keeyun, 17084 Yongin-si (KR)
(74) Representative: Marks & Clerk LLP

(57) **Abstract**

A secondary battery including an electrode assembly, a can accommodating the electrode assembly, a cap plate coupled to a first side of the can, the cap plate including vent holes, and a vent sealing peripheral portions of the vent holes, the vent including an adhesive portion on a region corresponding to the peripheral portions of the vent holes.

## Description

### BACKGROUND

### 1. Field

The present disclosure relates to a secondary battery and a method of manufacturing the same.

### 2. Description of the Related Art

Unlike primary batteries that are not designed to be (re)charged, secondary (or rechargeable) batteries are batteries that are designed to be discharged and recharged. Low-capacity secondary batteries are used in portable, small electronic devices, such as smart phones, feature phones, notebook computers, digital cameras, and camcorders, while large-capacity secondary batteries are widely used as power sources for driving motors in hybrid vehicles and electric vehicles and for storing power (e.g., home and/or utility scale power storage). A secondary battery generally includes an electrode assembly composed of a positive electrode and a negative electrode, a can accommodating the same, and electrode terminals connected to the electrode assembly.

The above information disclosed in this Background section is for enhancement of understanding of the background of the present disclosure, and therefore, it may contain information that does not constitute related (or prior) art.

### SUMMARY

According to embodiments of the present disclosure, a secondary battery includes an electrode assembly, a can accommodating the electrode assembly, a cap plate coupled to a first side of the can, the cap plate having vent holes, and a vent disposed to seal a peripheral portion of the vent holes, the vent including an adhesive portion including an adhesive applied to a portion corresponding to a peripheral portion of the vent holes.

According to embodiments, the vent may include a high heat resistant material.

According to embodiments, the vent may include a resin material.

According to embodiments, the resin material may include one of polyimide, polytetrafluoroethylene, polypropylene, polyphenylene sulfide, and mixtures thereof.

According to embodiments, the vent may have an elliptical shape.

According to embodiments, the adhesive portion may have an annular shape, and a non-adhesive portion of the vent other than the adhesive portion may have an elliptical portion.

According to embodiments, the adhesive may include an acrylic-based adhesive.

According to embodiments, the vent may have a breaking pressure of 10 kgf/cm² to 30 kgf/cm².

According to embodiments, the cap plate may include a first vent hole and a second vent hole positioned in a central portion of the cap plate and spaced apart from each other.

According to embodiments, the first vent hole and the second vent hole may have the same size and shape.

According to embodiments, the first vent hole and the second vent hole may have a circular shape.

According to embodiments, the diameter of the first vent hole may be the same as the diameter of the second vent hole.

According to embodiments, a sum of the area of the first vent hole and the area of the second vent hole may be smaller than the area of a non-adhesive portion of the vent other than the adhesive portion.

According to embodiments, the center of the vent may correspond to the center of an intermediate region positioned between the first vent hole and the second vent hole.

According to embodiments, the vent may be disposed on a bottom surface of the cap plate facing the electrode assembly.

According to embodiments, the cap plate may include a stepped portion positioned on a bottom of the cap plate facing the electrode assembly and configured such that the adhesive portion of the vent may be seated thereon.

According to embodiments, the stepped portion may include: a first surface perpendicularly connected to a bottom surface of the cap plate positioned around the vent holes and a second surface parallel to the bottom surface of the cap plate and connected to the first surface.

According to embodiments, the area of the second surface of the stepped portion may be greater than or equal to the area of the adhesive portion of the vent.

According to embodiments, the height of the first surface of the stepped portion may be greater than or equal to the thickness of the vent.

According to embodiments of the present disclosure, a method of fabricating a secondary battery includes preparing an electrode assembly including a first electrode, a second electrode, and a separator, inserting the electrode assembly into a can through an opening provided in a first side of the can; disposing a vent including an adhesive portion with an adhesive applied thereto on peripheral portions of a plurality of vent holes of a cap plate to seal the vent holes; coupling the cap plate, on which the vent is disposed, to the opening of the can, and injecting electrolyte into the can through an electrolyte inlet.

At least some of the above and other features of the invention are set out in the claims.

These and other aspects and features of the present disclosure will be described in or will be apparent from the following description of embodiments of the present disclosure.

### BRIEF DESCRIPTION OF THE DRAWINGS

The following drawings attached to this specification illustrate embodiments of the present disclosure, and further describe aspects and features of the present disclosure together with the detailed description of the present disclosure. Thus, the present disclosure should not be construed as being limited to the drawings.
FIG. 1 illustrates an exploded perspective view showing a secondary battery according to embodiments of the present disclosure.
FIG. 2 illustrates a perspective view showing a secondary battery according to embodiments of the present disclosure.
FIG. 3 illustrates a perspective view showing a cap plate provided with a vent according to embodiments of the present disclosure.
FIG. 4 illustrates a plan view showing a vent according to embodiments of the present disclosure.
FIG. 5 illustrates a perspective view showing the cap plate according to embodiments of the present disclosure.
FIG. 6 illustrates an enlarged perspective view showing part A of FIG. 5.
FIG. 7 illustrates a cross-section of the cap plate of FIG. 6, along line X-X'.
FIG. 8 illustrates a perspective view showing the bottom surface of the cap plate having a stepped portion according to embodiments of the present disclosure.
FIG. 9 illustrates a plan view showing the bottom surface of the cap plate provided with a vent according to embodiments of the present disclosure.
FIG. 10 illustrates a flowchart of a method of manufacturing a secondary battery according to embodiments of the present disclosure.

### DETAILED DESCRIPTION

Hereinafter, embodiments of the present disclosure will be described, in detail, with reference to the accompanying drawings. The terms or words used in this specification and claims should not be construed as being limited to the usual or dictionary meaning and should be interpreted as meaning and concept consistent with the technical idea of the present disclosure based on the principle that the inventor can be his/her own lexicographer to appropriately define the concept of the term to explain his/her invention in the best way.

The embodiments described in this specification and the configurations shown in the drawings are only some of the embodiments of the present disclosure and do not represent all of the technical ideas, aspects, and features of the present disclosure. Accordingly, it should be understood that there may be various equivalents and modifications that can replace or modify the embodiments described herein at the time of filing this application.

It will be understood that when an element or layer is referred to as being "on," "connected to," or "coupled to" another element or layer, it may be directly on, connected, or coupled to the other element or layer or one or more intervening elements or layers may also be present. When an element or layer is referred to as being "directly on," "directly connected to," or "directly coupled to" another element or layer, there are no intervening elements or layers present. For example, when a first element is described as being "coupled" or "connected" to a second element, the first element may be directly coupled or connected to the second element or the first element may be indirectly coupled or connected to the second element via one or more intervening elements.

In the figures, dimensions of the various elements, layers, etc. may be exaggerated for clarity of illustration. The same reference numerals designate the same elements. As used herein, the term "and/or" includes any and all combinations of one or more of the associated listed items. Further, the use of "may" when describing embodiments of the present disclosure relates to "one or more embodiments of the present disclosure." Expressions, such as "at least one of" and "any one of," when preceding a list of elements, modify the entire list of elements and do not modify the individual elements of the list. When phrases such as "at least one of A, B and C, "at least one of A, B or C," "at least one selected from a group of A, B and C," or "at least one selected from among A, B and C" are used to designate a list of elements A, B and C, the phrase may refer to any and all suitable combinations or a subset of A, B and C, such as A, B, C, A and B, A and C, B and C, or A and B and C. As used herein, the terms "use," "using," and "used" may be considered synonymous with the terms "utilize," "utilizing," and "utilized," respectively. As used herein, the terms "substantially," "about," and similar terms are used as terms of approximation and not as terms of degree, and are intended to account for the inherent variations in measured or calculated values that would be recognized by those of ordinary skill in the art.

It will be understood that, although the terms first, second, third, etc. may be used herein to describe various elements, components, regions, layers, and/or sections, these elements, components, regions, layers, and/or sections should not be limited by these terms. These terms are used to distinguish one element, component, region, layer, or section from another element, component, region, layer, or section. Thus, a first element, component, region, layer, or section discussed below could be termed a second element, component, region, layer, or section without departing from the teachings of example embodiments.

Spatially relative terms, such as "beneath," "below," "lower," "above," "upper," and the like, may be used herein for ease of description to describe one element or feature's relationship to another element(s) or feature(s) as illustrated in the figures. It will be understood that the spatially relative terms are intended to encompass different orientations of the device in use or operation in addition to the orientation depicted in the figures. For example, if the device in the figures is turned over, elements described as "below" or "beneath" other elements or features would then be oriented "above" or "over" the other elements or features. Thus, the term "below" may encompass both an orientation of above and below. The device may be otherwise oriented (rotated 90 degrees or at other orientations), and the spatially relative descriptors used herein should be interpreted accordingly.

The terminology used herein is for the purpose of describing embodiments of the present disclosure and is not intended to be limiting of the present disclosure. As used herein, the singular forms "a" and "an" are intended to include the plural forms as well, unless the context clearly indicates otherwise. It will be further understood that the terms "includes," "including," "comprises," and/or "comprising," when used in this specification, specify the presence of stated features, integers, steps, operations, elements, and/or components but do not preclude the presence or addition of one or more other features, integers, steps, operations, elements, components, and/or groups thereof.

Also, any numerical range disclosed and/or recited herein is intended to include all sub-ranges of the same numerical precision subsumed within the recited range. For example, a range of "1.0 to 10.0" is intended to include all subranges between (and including) the recited minimum value of 1.0 and the recited maximum value of 10.0, that is, having a minimum value equal to or greater than 1.0 and a maximum value equal to or less than 10.0, such as, for example, 2.4 to 7.6. Any maximum numerical limitation recited herein is intended to include all lower numerical limitations subsumed therein, and any minimum numerical limitation recited in this specification is intended to include all higher numerical limitations subsumed therein. Accordingly, Applicant reserves the right to amend this specification, including the claims, to expressly recite any sub-range subsumed within the ranges expressly recited herein. All such ranges are intended to be inherently described in this specification such that amending to expressly recite any such subranges would comply with the requirements of Article 123(2) EPC.

References to two compared elements, features, etc. as being "the same" may mean that they are "substantially the same". Thus, the phrase "substantially the same" may include a case having a deviation that is considered low in the art, for example, a deviation of 5% or less. In addition, when a certain parameter is referred to as being uniform in a given region, it may mean that it is uniform in terms of an average.

Throughout the specification, unless otherwise stated, each element may be singular or plural.

Arranging an arbitrary element "above (or below)" or "on (under)" another element may mean that the arbitrary element may be disposed in contact with the upper (or lower) surface of the element, and another element may also be interposed between the element and the arbitrary element disposed on (or under) the element.

In addition, it will be understood that when a component is referred to as being "linked," "coupled," or "connected" to another component, the elements may be directly "coupled," "linked" or "connected" to each other, or another component may be "interposed" between the components.

Throughout the specification, when "A and/or B" is stated, it means A, B or A and B, unless otherwise stated. That is, "and/or" includes any or all combinations of a plurality of items enumerated. When "C to D" is stated, it means C or more and D or less, unless otherwise specified.

In the present disclosure, the dimensions and relative sizes of the shown layers and regions may be exaggerated for clarity of description. That is, the dimensions shown in the drawings are for illustrative purposes only and are not intended to be limiting. In addition, throughout the specification, the same reference numerals designate the same elements.

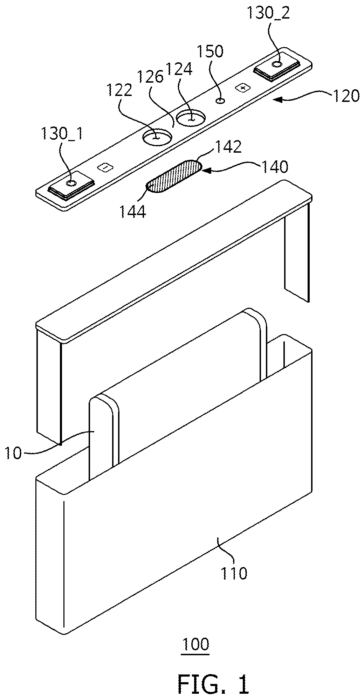

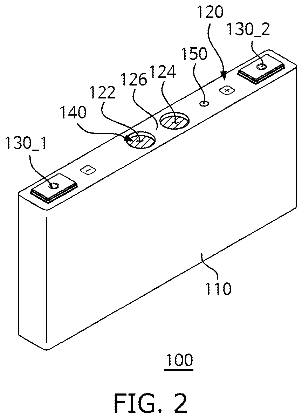

FIG. 1 illustrates an exploded perspective view showing a secondary battery according to embodiments of the present disclosure, and FIG. 2 illustrates a perspective view showing a secondary battery according to embodiments of the present disclosure.

Referring to FIGS. 1 and 2, a secondary battery 100 may include at least one electrode assembly 10 having a bent or stacked structure in which a separator, i.e., an insulator, is provided between a positive electrode and a negative electrode, a can 110 in which the electrode assembly 10 is accommodated, and a cap plate 120 coupled to an open end of the can 110. For example, referring to FIG. 2, the secondary battery 100 may be a prismatic secondary battery. In another example, the secondary battery 100 may be any of various types of secondary batteries.

Each of the positive electrode and the negative electrode may include a current collector made of a thin metal foil having a coated portion on which an active material is coated and an uncoated portion on which an active material is not coated. The positive electrode and the negative electrode are wound after interposing the separator, which is an insulator, therebetween. However, the present disclosure is not limited thereto, and the electrode assembly may have a structure in which a positive electrode and a negative electrode, each made of a plurality of sheets, are alternately stacked with a separator interposed therebetween.

The secondary battery 100 shown in FIGS. 1 and 2 may be a lithium secondary battery.

A positive electrode for a rechargeable lithium battery may include a current collector and a positive electrode active material layer on the current collector. The positive electrode active material layer may include a positive electrode active material and may further include a binder and/or a conductive material (e.g., an electrically conductive material).

The separator may include, e.g., polyethylene, polypropylene, polyvinylidene fluoride, or a multilayer film of two or more layers thereof, and a mixed multilayer film such as a polyethylene/polypropylene two-layer separator, polyethylene/polypropylene/polyethylene three-layer separator, polypropylene/polyethylene/polypropylene three-layer separator, and the like.

The negative electrode for a rechargeable lithium battery may include a current collector and a negative electrode active material layer on the current collector. The negative electrode active material layer may include a negative electrode active material, and may further include a binder and/or a conductive material (e.g., an electrically conductive material).

The electrode assembly 10 may have a positive electrode tab connected to a first side of the positive electrode and a negative electrode tab connected to a first side of the negative electrode. The positive electrode tab and the negative electrode tab may be respectively electrically connected to a positive electrode terminal 130_1 and a negative electrode terminal 130_2 provided on the cap plate 120.

The can 110 may form the overall outer appearance of the secondary battery 100 and may be made of a conductive metal, such as aluminum, aluminum alloy, or nickel-plated steel. In addition, the can 110 may provide a space in which the electrode assembly 10 is accommodated.

For example, referring to FIG. 2, the can 110 may be a prismatic can, and the secondary battery 100 may be a prismatic secondary battery. In another example, the secondary battery 100 may have any suitable shape, e.g., a cylindrical shape, or a pouch shape.

The can 110 may include long side wall portions opposing each other and short side wall portions opposing each other. The long side wall portions may include a first long side wall portion and a second long side wall portion. The first long side wall portion and the second long side wall portion may be opposite each other. The first long side wall portion and the second long side wall portion may be spaced apart from each other while facing each other. The short side wall portions may include a first short side wall portion and a second short side wall portion. The first short side wall portion and the second short side wall portion may be spaced apart from each other while facing each other. The area of each of the first short side wall portion and the second short side wall portion may be smaller than the area of each of the first long side wall portion and the second long side wall portion.

The cap plate 120 may be coupled to an open first end of the can 110, thereby sealing the can 110. The can 110 and the cap plate 120 may be made of a conductive material. According to an embodiment, the upper end of the can 110 may be open, and the cap plate 120 may seal the open upper end of the can 110.

The cap plate 120 may be provided with a plurality of vent holes 122 and 124. The cap plate 120 may include a first vent hole 122 and a second vent hole 124 disposed on the central portion of the cap plate 120 and spaced apart from each other. The cap plate 120 may include an intermediate region 126 positioned between the first vent hole 122 and the second vent hole 124 spaced apart from each other.

The positive electrode terminal 130_1 electrically connected to the positive electrode and the negative electrode terminal 130_2 electrically connected to the negative electrode may be coupled to the cap plate 120. For example, the positive and negative electrode terminals 130_1 and 130_2 may be disposed to protrude outward through the cap plate 120.

A vent 140 may be provided on at least one side of the secondary battery 100. As shown in FIG. 2, the vent 140 may be disposed on the top surface of the secondary battery 100, i.e., on the cap plate 120. The vent 140 may be configured to open in an event that an internal pressure above a predetermined threshold pressure occurs in the secondary battery 100. The threshold pressure set in advance to prevent explosion and overheating of the secondary battery 100 may be a breaking pressure of the vent 140 caused by the internal pressure in the secondary battery 100.

The vent 140 may be disposed to seal peripheral portions of the first and second vent holes 122 and 124 of the cap plate 120, and an adhesive portion 142 with an adhesive applied thereto may be provided on a portion corresponding to the peripheral portions of the first and second vent holes 122 and 124 of the cap plate 120. The vent 140 may include a non-adhesive portion 144 corresponding to a portion of the vent 140 other than the adhesive portion 142, and the non-adhesive portion 144 may be disposed to correspond to the first and second vent holes 122 and 124 of the cap plate 120.

The vent 140 may be disposed on a bottom surface of the cap plate 120 facing the electrode assembly 10, e.g., the vent 140 may be between the cap plate 120 and the electrode assembly 10 . The adhesive portion 142 of the vent 140 may be attached to the peripheral portions of the first and second vent holes 122 and 124 of the cap plate 120. Accordingly, in a case where the internal pressure of the secondary battery 100 is greater than the breaking pressure of the vent 140, the adhesive portion 142 of the vent 140 may be broken or detached from the first and second vent holes 122 and 124 to release the internal pressure of the secondary battery 100.

The cap plate 120 may include an electrolyte inlet 150. For example, the electrolyte inlet 150 may be a through-hole provided in the cap plate 120. After the cap plate 120 is coupled to an open area in the can 110 and sealed, the electrolyte inlet 150 allowing electrolyte to be injected into the can 110 may be formed. After the electrolyte is injected, the electrolyte inlet 150 may be sealed with a sealing member.

The secondary battery 100 may be, e.g., a lithium battery cell, a sodium battery cell, or the like. However, the secondary battery 100 may include any battery capable of repeatedly providing electricity by charging and discharging. In an embodiment, in a case where the secondary battery 100 is a lithium secondary battery, the lithium secondary battery 100 may be used in an electric vehicle (EV) due to excellent life characteristics and high rate characteristics. The secondary battery 100 may also be used in a hybrid vehicle such as a plug-in hybrid electric vehicle (PHEV). Lithium secondary batteries may be used in applications requiring large amounts of power storage. For example, lithium secondary batteries may be used in electric bicycles, power tools, and the like.

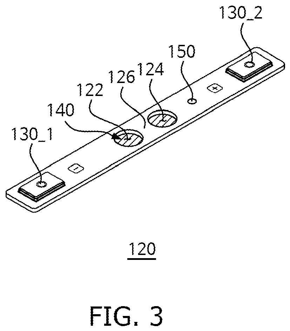

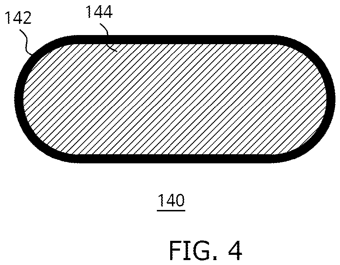

FIG. 3 illustrates a perspective view showing the cap plate 120 with the vent 140 according to embodiments of the present disclosure, and FIG. 4 illustrates a plan view showing the vent 140 according to embodiments of the present disclosure.

Referring to FIGS. 3 and 4, the vent 140 may be provided with the adhesive portion 142 having an adhesive applied to a band-like region of the vent 140 surrounding the outermost portion. The non-adhesive portion 144 that is the portion of the vent 140 other than the adhesive portion 142 may have a size or shape corresponding (e.g., equal) to the first and second vent holes 122 and 124 and the intermediate region 126 of the cap plate 120. For example, referring to FIGS. 3 and 4, the non-adhesive portion 144 may have a size and a shape (e.g., an oval shape) that completely and continuously covers and overlaps a combined region of the first and second vent holes 122 and 124 with the intermediate region 126 therebetween, and the adhesive portion 142 may be a peripheral region of the non-adhesive portion 144 that completely and continuously surrounds a perimeter of the non-adhesive portion 144, as viewed in a top view.

As the internal pressure of the secondary battery 100, including the cap plate 120 to which the vent 140 is attached, increases, the internal temperature of the secondary battery 100 may increase to about 200 °C. If the internal pressure of the secondary battery 100 is greater than or equal to the breaking pressure of the vent 140, the adhesive portion 142 of the vent 140 may break or may be detached from at least one of the first and second vent holes 122 and 124 of the cap plate 120, thereby releasing the internal pressure of the secondary battery 100. Accordingly, the material or physical properties of the vent 140 may be configured such that the vent 140 may not break before the internal pressure of the secondary battery 100 reaches the breaking pressure of the vent 140.

According to an embodiment, the vent 140 may include a material having high heat resistance. A high temperature resistant material may be a material that is capable of maintaining its physical and chemical properties at elevated temperatures, and may be heat resistant so as not to break at an internal temperature of about 200 °C or lower, which is the internal temperature of the secondary battery 100. For example, the high temperature resistant material may include at least one of ceramics, super alloys, heat resistant steels, carbon materials, carbon composites, and specialty plastics. In a case where the vent 140 is formed using a high heat resistant material having such properties, the vent 140 may not break even if the internal temperature of the secondary battery 100 increases to about 200°C before the internal pressure of the secondary battery 100 reaches the breaking pressure of the vent 140.

According to an embodiment, the vent 140 may include a resin material. The resin material is a polymeric material that may have a variety of shapes and properties. The resin material may be heat resistant so as not to break at an internal temperature of the secondary battery 100 of about 200 °C or lower. In addition, the resin material may be easily molded into an intended shape, and has a lower unit cost than a metal material, thereby reducing the manufacturing cost of the vent 140.

With respect to the heat resistance described above, the resin material may include a high heat resistant material. Further, the resin material having high heat resistance may include at least one of, e.g., polyimide (PI), polytetrafluoroethylene (PTFE), polypropylene (PP), polyphenylene sulfide (PPS), and mixtures thereof.

According to an embodiment, the vent 140 may be configured to have a symmetrical structure to evenly receive the internal pressure of the secondary battery 100. The shape of the vent 140 may be symmetrical with respect to the longitudinal direction of the cap plate 120, and may be symmetrical with respect to the transverse direction of the cap plate 120, e.g., a center of the vent 140 may be aligned with the intermediate region 126. For example, the shape of the vent 140 may include one of circular, oval, and prismatic shapes.

In an embodiment, the vent 140 may be configured to have an elliptical shape. For example, in a case where the first and second vent holes 122 and 124 are circular, the long axis of the vent 140 may be longer than the sum of the diameters of the vent holes 122 and 124, and the short axis of the vent 140 may be longer than the diameter of each of the vent holes 122 and 124. In addition, the long axis of the vent 140 may be shorter than the length between electrode terminals 130_1 and 130_2 of the cap plate 120, and the short axis of the vent 140 may be shorter than the width of the cap plate 120.

According to an embodiment, the shape of the vent 140 may be configured such that a rectangle connects semicircles. The rectangle connecting the semicircles may include a rectangle or a square. The length of opposite sides of the rectangle connecting the semicircles may be equal to the diameter of the semicircles.

In an embodiment, the shape of the vent 140 may be set such that a rectangle connects halves of a circle (hereinafter, referred to as "semicircles"). The area of the vent 140 may vary depending on the length of the rectangle in a direction perpendicular to the direction in which the semicircles are cut. Thus, the length of the rectangle in the direction perpendicular to the direction in which the semicircles are cut may be set in consideration of the breaking pressure of the vent 140. Due to this characteristic structure, the shape of the vent 140 or the non-adhesive portion 144, which is a portion of the vent 140 other than the adhesive portion 142, may correspond to the shape of the first and second vent holes 122 and 124 of the cap plate 120, and may be disposed on the first and second vent holes 122 and 124 and the peripheral portions of the vent holes 122 and 124.

In an embodiment, the area of the vent 140 may be greater than the area of the first and second vent holes 122 and 124 of the cap plate 120. The area of the non-adhesive portion 144, which is the portion of the vent 140 other than the adhesive portion 142, may be greater than a combined area of the first and second vent holes 122 and 124 of the cap plate 120. In addition, the length of the vent 140 in the longitudinal direction of the cap plate 120 may be greater than the length of the sum of the diameters of the first and second vent holes 122 and 124 (e.g., may be greater than a combined length of the diameters of the first and second vent holes 122 and 124 and the intermediate region 126 therebetween). The length of the vent 140 in the transverse direction of the cap plate 120 may be greater than the diameter of each of the first and second holes 122 and 124. For example, referring to FIG. 1, the vent 140 in each of the longitudinal and transverse directions of the cap plate 120 may extend beyond the first and second holes 122 and 124. Accordingly, the vent 140 may be disposed to seal (e.g., completely cover and overlap) the first and second vent holes 122 and 124 by attaching or airtightly fixing the adhesive portion 142 of the vent 140 to the peripheral portions of the vent holes 122 and 124, e.g., the adhesive portion 142 of the vent 140 may attach directly to the bottom surface of the cap plate 120 in the peripheral portions of the first and second vent holes 122 and 124.

According to an embodiment, the area of the vent 140 may be smaller than the area of the cap plate 120. In addition, in the longitudinal direction of the cap plate 120, the length of the first vent hole 122 may be smaller than the length between the electrode terminals 130_1 and 130_2 of the cap plate 120. In the transverse direction of the cap plate 120, the length of the first vent hole 122 may be smaller than the length of the width of the cap plate 120. Accordingly, attaching or fixing the adhesive portion 142 of the vent 140 to the top surface of the cap plate 120 may allow the vent 140 to appropriately break or be detached from the cap plate 120.

According to an embodiment, the vent 140 may have the adhesive portion 142 to which an adhesive is applied. In particular, the adhesive may include an acrylic adhesive. The acrylic adhesive may be based on an acrylic polymer, and may have strong adhesion. In a case where the vent 140 is made of a resin material, the adhesive portion 142 may be configured as an acrylic adhesive capable of providing strong adhesion to the surface of the resin material. As a result, if the internal pressure of the secondary battery 100 is lower than the breaking pressure of the vent 140, the vent 140 may not break or may not be detached from the cap plate 120.

According to an embodiment, the shape of the adhesive portion 142 of the vent 140 may be configured to be annular. The annular shape may have a cavity in the central portion, and may have circular or elliptical outer and inner boundaries, e.g., circular or elliptical ring shape. The annular shape may have a width equal to the difference between the outer and inner boundaries. In addition, the adhesive portion 142 may be provided in a region adjacent to an edge of the vent 140. Accordingly, the outer boundary of the adhesive portion 142 may be positioned flush (e.g., aligned) with or further inward than the edges of the vent 140. In addition, the inner boundary of the adhesive portion 142 may be shaped to be spaced apart a predetermined distance from the outer boundary. Accordingly, the adhesive portion 142 of the vent 140 may appropriately break or be detached from the cap plate 120 in response to the internal pressure of the secondary battery 100 uniformly applied thereto. The shape of the adhesive portion 142 of the vent 140 may have a variety of shapes within the overall area of the vent 140. For example, the adhesive portion 142 may have an annular shape formed in a region adjacent to a peripheral portion of the vent 140, while having an additional adhesive applied to a region spanning the short diameter of the annular shape. Due to the adhesive portion 142 configured in this manner, in a case where the adhesive portion 142 of the vent 140 is attached or fixed to the bottom surface of the cap plate 120, the bottom surface of the cap plate 120 may hermetically seal not only the peripheral portions of the first and second vent holes 122 and 124, but also the portion between the vent holes 122 and 124.

The breaking pressure of the vent 140 may be greater than or equal to 10 kgf/cm². According to an embodiment, the breaking pressure of the vent 140 may be from 10 kgf/cm² to 30 kgf/cm². The breaking pressure of the vent 140 may be set differently depending on the size and shape of the secondary battery 100. Accordingly, the area of the adhesive portion 142 of the vent 140 may be set considering the breaking pressure of the vent 140. The greater the breaking pressure of the vent 140, the greater the area or width of the adhesive portion 142 may be. The smaller the breaking pressure of the vent 140, the smaller the area or width of the adhesive portion 142 may be. The vent 140 may have a variety of shapes and areas.

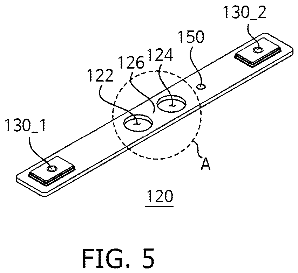

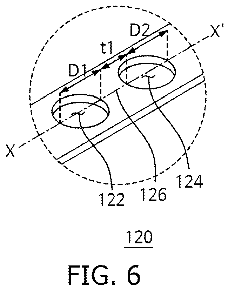

FIG. 5 illustrates a perspective view showing the cap plate 120 according to embodiments of the present disclosure, and FIG. 6 illustrates an enlarged perspective view showing part A of FIG. 5.

Referring to FIGS. 5 and 6, the cap plate 120 may be provided with the first and second vent holes 122 and 124 for releasing internal pressure of the secondary battery 100. The cap plate 120 may include the first vent hole 122 and the second vent hole 124 positioned on the central portion of the cap plate 120 and spaced apart from each other. The cap plate 120 may include the intermediate region 126 positioned between the first vent hole 122 and the second vent hole 124.

The first and second vent holes 122 and 124 of the cap plate 120 may be provided on the central portion of the cap plate 120. For example, the central portion of the cap plate 120 may be positioned approximately at the center of the length and width of the cap plate 120. Accordingly, the internal pressure of the secondary battery 100 may be concentrated at the first and second vent holes 122 and 124 of the cap plate 120.

In an embodiment, the shape of each of the first and second vent holes 122 and 124 may be set to have a symmetrical structure to uniformly release the internal pressure of the secondary battery 100. The shape of each of the first and second vent holes 122 and 124 may be symmetrical with respect to the longitudinal direction of the cap plate 120, and may be symmetrical with respect to the transverse direction of the cap plate 120. For example, the shape of each of the first and second vent holes 122 and 124 may include any one of a circular shape, an elliptical shape, or a square shape.

For example, the shape of each of the first and second vent holes 122 and 124 of the cap plate 120 may be circular. For example, the first vent hole 122 and the second vent hole 124 may be formed in the longitudinal direction of the cap plate 120 with the intermediate region 126 being provided therebetween. In the longitudinal direction of the cap plate 120, the sum of the diameter D1 of the first vent hole 122, the length t1 of the intermediate region 126, and the diameter D2 of the second vent hole 124 may be smaller than the length between the electrode terminals 130_1 and 130_2 of the cap plate 120. The diameter of each of the first vent hole 122 and the second vent hole 124 may be smaller than the transverse length of the cap plate 120.

In an embodiment, the first vent hole 122 and the second vent hole 124 may have the same size and shape. Each of the first vent hole 122 and the second vent hole 124 may have a circular shape. In a case where the first vent hole 122 and the second vent hole 124 are circular, the diameter D1 of the first vent hole 122 may be the same as the diameter D2 of the second vent hole 124. Accordingly, the pressure exerted by the internal gas of the secondary cell exiting through the first vent hole 122 and the second vent hole 124 may act uniformly to cause the vent 140 to properly fracture or break away from the cap plate 120.

In an embodiment, the sum of the area of the first vent hole 122 and the area of the second vent hole 124 may be smaller than the area of the cap plate 120. In addition, the sum of the area of the first vent hole 122 and the area of the second vent hole 124 may be smaller than the area of the non-adhesive portion 144 corresponding to the portion of the vent 140 other than the adhesive portion 142.

In an embodiment, the area of the first vent hole 122 and the area of the second vent hole 124 may be set by considering the breaking pressure of the vent 140. In a case where the first vent hole 122 and the second vent hole 124 are circular, the diameter D1 of the first vent hole 122 and the diameter D2 of the second vent hole 124 may be at least 15 mm. The diameter D1 of the first vent hole and the diameter D2 of the second vent hole may be adjustable depending on the breaking pressure of the vent 140 required in various secondary cells. This makes it easy to prevent ignition of secondary cells of different sizes and shapes. However, the first vent hole 122 and the second vent hole 124 may have various shapes and areas.

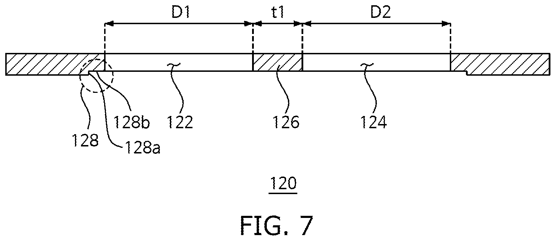

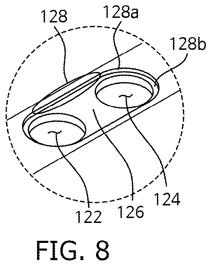

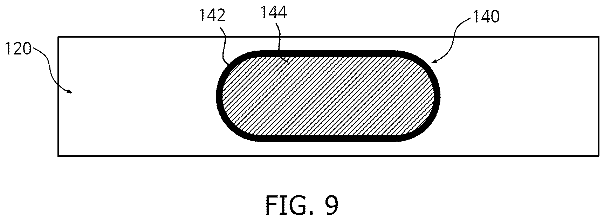

FIG. 7 illustrates a cross-section of the cap plate 120 of FIG. 6, taken along line X-X', FIG. 8 illustrates a perspective view showing the bottom surface of the cap plate 120 having a stepped portion according to embodiments of the present disclosure, and FIG. 9 illustrates a plan view showing the bottom surface of the cap plate provided with a vent according to embodiments of the present disclosure.

Referring to FIGS. 7 to 9, the cap plate 120 may have a stepped portion 128 positioned on the bottom surface of the cap plate 120 facing the electrode assembly and configured such that the adhesive portion 142 of the vent 140 is seated thereon. In an embodiment, the stepped portion 128 of the cap plate 120 may include a first surface 128a perpendicularly connected to the bottom surface of the cap plate 120 positioned around the vent holes 122 and 124, and a second surface 128b parallel to the bottom surface of the cap plate 120 and connected to the first surface 128a (e.g., the second surface 128b may be at a different height than the bottom surface of the cap plate relative to a top surface of the cap plate 120). For example, referring to FIG. 8, the first surface 128a may extend continuously to surround both the first and second vent holes 122 and 124.

In an embodiment, the height of the first surface 128a of the stepped portion 128 of the cap plate 120 may be greater than or equal to the thickness of the vent 140. Thus, even in a case where other parts, such as insulating members, are disposed on the bottom surface of the cap plate 120 on which the vent 140 is disposed, such parts may not come into contact with the vent 140 and thus the adhesive force of the vent 140 may not be affected. Accordingly, the breaking pressure of the vent 140 may be easily adjusted so that the vent 140 may be appropriately broken or detached from the bottom surface of the cap plate 120.

In an embodiment, in the longitudinal direction of the cap plate 120, the first surface 128a of the stepped portion 128 may be formed to be longer than the sum of the diameter D1 of the first vent hole 122, the length t1 of the intermediate region 126, and the diameter D2 of the second vent hole 124. In the transverse direction of the cap plate 120, the first surface 128a of the stepped portion 128 may be formed longer than each of the diameter D1 of the first vent hole 122 and the diameter D2 of the second vent hole 124. The area in which the vent 140 may be disposed on the peripheral portions may be determined.

In an embodiment, the first surface 128a of the stepped portion 128 may correspond to (e.g., be the same as) the shape of the vent 140 (e.g., as viewed in a top view). Thus, the area in which the vent 140 may be disposed may be determined based on the area of the region defined by the first surface 128a of the stepped portion 128. The first surface 128a of the stepped portion 128 may be set to be greater than or equal to the area in which the vent 140 may be disposed. Thus, the vent 140 may be inserted into the stepped portion 128 of the cap plate 120 to seal the peripheral portions of the first vent hole 122 and the second vent hole 124 to facilitate placement of the vent 140. Thus, the area of the first vent hole 122 and the second vent hole 124 may determine the pressure exerted by the internal gas of the secondary cell. Accordingly, the breaking pressure of the vent 140 may be set by adjusting the area of the first vent hole 122 and the second vent hole 124.

In an embodiment, the area of the second surface 128b of the stepped portion 128 may be greater than or equal to the area of the adhesive portion 142 of the vent 140. The second surface 128b of the stepped portion 128 may be defined as the surface in the stepped portion 128 that is perpendicular to the first surface 128a but other than the intermediate region 126 between the first vent hole 122 and the second vent hole 124. The shape of the second surface 128b of the stepped portion 128 may correspond to (e.g., be the same as) the shape of the adhesive portion 142 of the vent 140. For example, the shape of the second surface 128b of the stepped portion 128 may be annular. The annular shape may have circular or elliptical outer and inner boundaries. The annulus may have a width equal to the difference between the outer boundary and the inner boundary. The outer boundary of the second surface 128b may be the same as the border of the first surface 128a, and the inner boundary of the second surface 124b may be shaped to be regularly spaced apart (e.g., at a constant distance) from the outer boundary. Accordingly, the adhesive portion 142 of the vent 140 may be easily seated on the second surface 128b of the stepped portion 128 (e.g., the adhesive portion 142 and the second surface 128b may vertically overlap each other), and the adhesive portion 142 of the vent 140 may be uniformly attached to the second surface 128b of the stepped portion 128, so that in a case where the internal pressure of the secondary cell increases to a breaking pressure, the adhesive portion 142 may be appropriately broken or detached from the second surface 128b.

Referring to FIGS. 8 and FIG. 9, the vent 140 may be inserted into the interior of the stepped portion 128 and may be seated on the second surface 128b of the stepped portion 128. The bottom surface of the vent 140 may be higher than the bottom surface of the cap plate 120 surrounding the stepped portion 128. Accordingly, the vent 140 may not protrude into the interior of the secondary cell (e.g., the vent 140 may completely fit within the stepped portion 128 without protruding outside the stepped portion 128), thereby preventing damage to the vent 140 by other parts of the secondary cell. With this characteristic structure, the vent 140 may be broken or detached only in the case where the internal pressure of the secondary cell exceeds the breaking pressure of the vent 140, thereby fulfilling the function properly.

In an embodiment, in a case where the vent 140 has a smaller area, the vent 140 may be more easily inserted into the interior of the stepped portion 128. As the area of the vent 140 is reduced, the area of the adhesive portion 142 of the vent 140 may also be reduced. Additional adhesive may be applied to the adhesive portion 142 in the direction of the inner boundary of the adhesive portion 142 to supplement adhesion. In addition, an adhesive may be applied to at least a portion of the interior region of the adhesive portion 142 corresponding to the intermediate region 126. Accordingly, the area of the second surface 128b of the stepped portion 128 of the cap plate 120 may be increased to correspond to the area of the adhesive portion 142.

In an embodiment, the center of the vent 140 may correspond to the center of the intermediate region 126 positioned between the first vent hole 122 and the second vent hole 124. The center of the intermediate region 126 may be positioned to be equally spaced apart from the centers of the first vent hole 122 and the second vent hole 124. The vent 140 may be disposed to seal the peripheral portions of the first vent hole 122 and the second vent hole 124 of the cap plate 120. Accordingly, the internal pressure of the secondary cell may be uniformly applied to the portions of the vent 140 corresponding to the first vent hole 122 and the second vent hole 124, such that in a case where the internal pressure of the secondary cell is greater than or equal to the breaking pressure of the vent 140, the vent 140 may be properly broken or be detached from the cap plate 120.

In a case where a secondary battery includes the cap plate 120 having the above-described configuration, the vent 140 attached to the first and second vent holes 122 and 124 provided on the cap plate 120 may be broken or detached under the internal pressure of the secondary battery, thereby preventing explosion and ignition of the secondary battery.

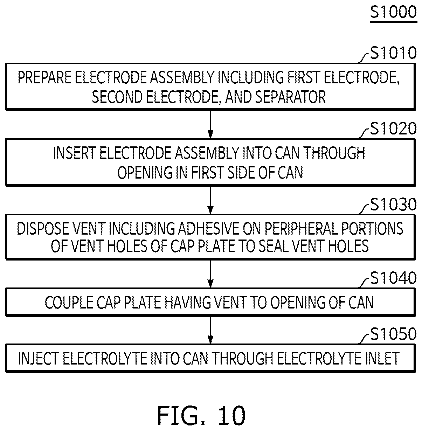

FIG. 10 illustrates a flowchart showing a method of manufacturing a secondary battery according to embodiments of the present disclosure.

Referring to FIG. 10, a method S1000 of manufacturing a secondary battery may begin by preparing an electrode assembly including a first electrode, a second electrode, and a separator in S1010.

In S1020, the electrode assembly may be inserted into a can through an opening formed in a first side of the can. In an embodiment, the can may be an angular can. In an embodiment, a cap plate may be coupled to an opening of the can to seal the can. In an embodiment, the can and the cap plate may be made of a conductive material.

Before sealing the can with the cap plate, a vent including an adhesive portion having an adhesive applied thereto may be disposed on the cap plate having a plurality of vent holes (e.g., on peripheral portions of the vent holes), thereby sealing the vent holes in S1030.

In an embodiment, the vent holes may be formed in the central portion of the cap plate. In an embodiment, the shape of the vent holes may be circular. In an embodiment, the sum of the areas of the vent holes may be smaller than the area of the cap plate. Specifically, in the longitudinal direction of the cap plate, the sum of the diameters of the vent holes may be smaller than the length between the electrode terminals of the cap plate. In the transverse direction of the cap plate, the diameter of the vent holes may be smaller than the transverse length of the cap plate.

In an embodiment, the vent may include a high heat resistant material. The high heat resistant material is a material that may maintain physical and chemical properties thereof at high temperatures, and may be heat resistant to not break at about 200 °C, which is the internal temperature of the secondary cell. In an embodiment, the resin material having high heat resistance may include one of polyimide (PI), polytetrafluoroethylene (PTFE), polypropylene (PP), polyphenylene sulfide (PPS), and mixtures thereof. Accordingly, the resin material may be easily molded into a desired shape, thereby allowing the vent to be manufactured in a variety of shapes, and may reduce the cost of the vent manufacturing process due to the lower unit cost than metallic materials.

In an embodiment, the shape of the vent may be set such that a rectangle connects semicircles, i.e., halves of a circle. In an embodiment, the area of the vent may be greater than the area of the vent hole of the cap plate and smaller than the area of the cap plate. In an embodiment, the adhesive applied to the adhesive portion may include an acrylic-based adhesive, and the shape of the adhesive portion may be set as an annular shape. In an embodiment, the breaking pressure of the vent may be 10 kgf/cm² or more.

In an embodiment, the adhesive may include an acrylic-based adhesive. The acrylic-based adhesive has an acrylic polymer as a main component, and may have strong adhesion. In a case where the vent is made of a resin material, the adhesive portion may be set as an acrylic-based adhesive that may provide strong adhesion to the surface of the resin material.

In an embodiment, the vent may be disposed on the bottom surface of the cap plate to seal the vent holes. The vent may be inserted into and disposed in a stepped portion of the cap plate. As a result, the process of manufacturing and disposing the vent may be simplified, thereby reducing defects occurring in the manufacture of a secondary battery.

Thereafter, the cap plate having the vent disposed thereon may be coupled to the opening of the can in S1040. Therefore, the can may be sealed with the cap plate having the vent.

Finally, electrolyte may be injected into the can through an electrolyte inlet in S1050.

The flowchart of FIG. 10 and the above description are only illustrative of the present disclosure. For example, one or more of the steps in the flowchart and the above description may be added/altered/deleted, the order of one or more of the steps may be changed, and one or more of the steps may be performed simultaneously.

By way of summation and review, as a type of secondary battery, lithium-ion (Li-ion) secondary batteries may be used. **In** a case where a Li-ion secondary battery is continuously left or used at high temperatures or charged or discharged with high current, an internal gas may be generated due to cell deterioration. The internal gas generated in the Li-ion secondary battery may increase the pressure inside the battery can and damage the electrode assembly, thereby causing a risk of ignition. In this regard, various efforts have been made to suppress melting of internal components in secondary batteries or to prevent ignition caused by damaged internal components.

Therefore, the present disclosure provides a secondary battery and a method of fabricating the same, in which ignition of the secondary battery may be prevented or substantially minimized. That is, according to embodiments of the present disclosure, a secondary battery may have a structure able to easily release internal pressure and a method of manufacturing the same.

According to some embodiments of the present disclosure, provided are a secondary battery and a method of manufacturing the same, in which in a case where the internal pressure of the secondary battery increases to be equal to or greater than a threshold pressure, a vent attached to a plurality of vent holes provided in a case of the secondary battery may be easily detached.

According to some embodiments of the present disclosure, the vent attached to the vent holes of the case may be broken or be detached by the internal pressure of the secondary battery, thereby preventing the secondary battery from exploding and igniting.

According to some embodiments of the present disclosure, the breaking pressure of the vent may be easily set by adjusting the area of the vent holes provided in the case or adjusting the area of the adhesive portion of the vent.

According to some embodiments of the present disclosure, in a case where the vent is made of a resin material, the resin material may be easily molded into a desired shape and may reduce the cost of the vent manufacturing process due to the lower unit cost than metallic materials

According to some embodiments of the present disclosure, the process of manufacturing and disposing the vent may be simplified, thereby reducing defects occurring in the manufacture of a secondary battery.

However, aspects and features of the present disclosure are not limited to those described above, and other aspects and features not mentioned will be clearly understood by a person skilled in the art from the detailed description, described above.

Although the present disclosure has been described above with respect to embodiments thereof, the present disclosure is not limited thereto. Various modifications and variations can be made thereto by those skilled in the art within the scope of the present disclosure and the equivalent scope of the appended claims.

Example embodiments have been disclosed herein, and although specific terms are employed, they are used and are to be interpreted in a generic and descriptive sense only and not for purpose of limitation. In some instances, as would be apparent to one of ordinary skill in the art as of the filing of the present application, features, characteristics, and/or elements described in connection with a particular embodiment may be used singly or in combination with features, characteristics, and/or elements described in connection with other embodiments unless otherwise specifically indicated. Accordingly, it will be understood by those of skill in the art that various changes in form and details may be made without departing from the scope of the present invention as set forth in the following claims.

## Claims

1. A secondary battery (100), comprising:
an electrode assembly (10);
a can (110) accommodating the electrode assembly (10);
a cap plate (120) coupled to a first side of the can (110), the cap plate (120) including vent holes (122, 124); and
a vent (140) on the cap plate (120) and sealing peripheral portions of the vent holes (122, 124), the vent (140) including an adhesive portion (142) on a region corresponding to the peripheral portions of the vent holes (122, 124).

2. The secondary battery (100) as claimed in claim 1, wherein the vent (140) includes a high heat resistant material.

3. The secondary battery (100) as claimed in claim 1 or 2, wherein the vent (140) has an elliptical shape.

4. The secondary battery (100) as claimed in claim 1, 2 or 3, wherein the vent (140) further includes a non-adhesive portion (144) having an elliptical shape, the adhesive portion (142) having an annular shape surrounding the non-adhesive portion (144).

5. The secondary battery (100) as claimed in any preceding claim, further comprising an adhesive on the adhesive portion (142), the adhesive including an acrylic-based adhesive.

6. The secondary battery as claimed in any preceding claim, wherein the vent (140) has a breaking pressure of 10 kgf/cm² to 30 kgf/cm².

7. The secondary battery (100) as claimed in any preceding claim, wherein the vent holes (122, 124) include a first vent hole (122) and a second vent hole (124) positioned in a central portion of the cap plate (120), the first vent hole (122) and the second vent hole (124) being spaced apart from each other.

8. The secondary battery (100) as claimed in claim 7, wherein each of the first vent hole (122) and the second vent hole (124) have a circular shape.

9. The secondary battery (100) as claimed in claim 7 or 8 when dependent on any one of claims 1 to 3, wherein the vent (140) further includes a non-adhesive portion (144) on the vent holes (122, 124), the non-adhesive portion (144) being surrounded by the adhesive portion (142), and a sum of an area of the first vent hole (122) and an area of the second vent hole (124) being smaller than an area of the non-adhesive portion (144).

10. The secondary battery (100) as claimed in claim 7, 8 or 9, wherein a center of the vent (140) corresponds to a center of an intermediate region (126) positioned between the first vent hole (122) and the second vent hole (124).

11. The secondary battery (100) as claimed in any preceding claim, wherein the vent (140) is on a bottom surface of the cap plate (120), the bottom surface of the cap plate (120) facing the electrode assembly (10).

12. The secondary battery (100) as claimed in any preceding claim, wherein the cap plate (120) includes a stepped portion (128) on a bottom surface of the cap plate (120), the bottom surface of the cap plate (120) facing the electrode assembly (10), and the vent (140) being within the stepped portion (128).

13. The secondary battery (100) as claimed in claim 12, wherein the stepped portion (128) includes:
a first surface (128a) perpendicularly connected to a bottom surface of the cap plate (128), the first surface (128a) surrounding the vent holes (122, 124); and
a second surface (128b) parallel to the bottom surface of the cap plate (120), the second surface (128b) being connected to the first surface (128a).

14. The secondary battery (100) as claimed in claim 13, wherein the adhesive portion (142) of the vent (140) is attached to the second surface (128b) of the stepped portion (128), an area of the second surface (128b) of the stepped portion (128) being greater than or equal to an area of the adhesive portion (142) of the vent (140).

15. A method of manufacturing a secondary battery (100), the method comprising:
preparing an electrode assembly (10) including a first electrode, a second electrode, and a separator;
inserting the electrode assembly (10) into a can (110) through an opening in a first side of the can (110);
preparing a cap plate (120) with vent holes (122, 124);
disposing a vent (140) on the cap plate (120) to seal the vent holes (122, 124), the vent (140) including an adhesive portion (142) with an adhesive applied to peripheral portions of the vent holes (122, 124);
coupling the cap plate (120), on which the vent (140) is disposed, to the opening of the can (110); and
injecting an electrolyte into the can (110) through an electrolyte inlet.
